# EUROPÄISCHE PATENTSCHRIFT

(11) **EP 0 626 108 B1**
(45) Veröffentlichungstag und Bekanntmachung des Hinweises auf die Patenterteilung: **08.05.1996**
(21) Anmeldenummer: 94900698.5
(22) Anmeldetag: 07.12.1993
(51) Int. Cl.: H02J 3/30, H02P 6/00, H02J 15/00

(54) **VORRICHTUNG UND VERFAHREN ZUR REVERSIBLEN SPEICHERUNG VON ELEKTRISCHER ENERGIE DURCH DEREN REVERSIBLE UMWANDLUNG**
DEVICE AND PROCESS FOR REVERSIBLY STORING ELECTRIC POWER BY ITS REVERSIBLE TRANSFORMATION
DISPOSITIF ET PROCEDE PERMETTANT L'ACCUMULATION REVERSIBLE D'ENERGIE ELECTRIQUE PAR CONVERSION REVERSIBLE DE LADITE ENERGIE

(30) Priorität: 10.12.1992 CH 3784/92
(43) Veröffentlichungstag der Anmeldung: 30.11.1994
(73) Patentinhaber: TWIX EQUIPMENT AG, CH-8132 Egg b. Zürich (CH)
(72) Erfinder: ZELLER, Mathias, CH-5426 Lengnau (CH)
(74) Vertreter: EGLI-EUROPEAN PATENT ATTORNEYS
(86) Internationale Anmeldenummer: CH9300274
(87) Internationale Veröffentlichungsnummer: WO9414219

(56) Entgegenhaltungen:
- EP-A- 0 220 713
- DE-A- 3 919 421
- US-A- 5 005 115
- PATENT ABSTRACTS OF JAPAN vol. 7, no. 200 (E-196) 3. September 1983 & JP-A-58 097 806

## Beschreibung

Die Erfindung betrifft eine Vorrichtung zur reversiblen Speicherung von elektrischer Energie durch deren reversible Umwandlung in kinetische Energie in einem Elektromotor, wobei die elektrische Energie aus einem Wechselstromnetz von vorbestimmter Frequenz bezogen bzw. in das Wechselstromnetz zurückgespeist wird, sowie ein Verfahren zum Betrieb dieser Vorrichtung und eine Verwendung eines bürstenlosen, elektronisch kommutierten Scheibenläufermotors mit am Läufer angeordneten Permanentmagneten und am Ständer angeordneten eisenlosen Wicklungen als Energiespeicher bei der vorgenannten reversiblen Speicherung von elektrischer Energie.

Im Zusammenhang mit der vorliegenden Erfindung ist, wenn nicht anderes präzisiert wird, generell zu verstehen, dass die in einem Elektromotor gespeicherte kinetische Energie sowohl in der mechanischen Form als auch in der elektrischen Form bzw. als Kombination und Summe dieser beiden Energieformen vorliegen kann.

Die mechanische Form der im Elektromotor gespeicherten kinetische Energie ist in der Drehung des Läufers gespeichert. Die elektrische Form der im Elektromotor gespeicherten kinetische Energie ist in dem Strom gespeichert, der durch solche Teile der Ständerwicklung fliesst, die als Induktionsspule bzw. Drossel wirken. Es ist dem Fachmann auf dem Gebier der Mechanik wohlbekannt, dass der drehende Läufer eine von seiner Trägheit und seiner Drehzahl abhängige mechanische Form von kinetischer Energie speichert, und es ist dem Fachmann auf dem Gebiet der Elektrotechnik wohlbekannt, dass eine Drossel bzw. Induktionsspule eine vom sie durchfliessenden Strom abhängige elektrische Form von kinetischer Energie speichert (zur weiteren Erläuterung wird vorgetragen, dass im Gegensatz dazu die elektrische Energie in einem Kondensator in Form von potentieller Energie gespeichert wird, was sich darin auswirkt, dass in einem LC-Oszillator die elektrische Energie zwischen der potentiellen Form und der kinetischen Form von elektrischer Energie ausgetauscht wird). Im Zusammenhang mit der vorliegenden erfindung sind die mechanische und die elektrische Form von kinetischer Energie zusammen zu betrachcen und zu berücksichtigen.

Es ist insbesondere zur unterbrechungsfreien Speisung einer Last von einem Wechselstromnetz bekannt, als Energie-speicher zur reversiblen Speicherung von elektrischer Energie einen Gleichstrommotor zu verwenden, der über einen netzseitigen Umrichter mit dem Wechselstromnetz und einem lastseitigen-Umrichter mit der Last verbunden ist. Es ist bei solchen Vorrichtungen stets nötig, eine Umschaltvorrichtung vorzusehen, um bei Bedarf, d.h. je nach den am Wechselstromnetz und an der Last herrschenden Bedingungen, die Last mit dem Wechselstromnetz oder mit dem lastseitigen Umrichter zu verbinden bzw. umzuschalten. In diesem Zusammenhang ist auch bekannt, Unzulänglichkeiten des Wechselstromnetzes wie Abweichungen bzw. Verzerrungen von Spannung, Wellenform, Frequenz, Phase usw. und Rückwirkungen der Last auf das Wechselstromnetz durch elektrische Energie zu korrigieren, die dem Gleichstrommotor entnommen und über dem netzseitigen Umrichter und/oder dem lastseitigen Umrichter in das Wechselsromnetz bzw. in die Last eingespeist wird.

Es gibt jedoch manche Fälle, bei denen diese bekannte Technik insbesondere aus Kostengründen und/oder Platzgründen gar nicht oder nur eingeschränkt bzw. mit Vorbehalten anwendbar ist. Solche Fälle sind in der Antriebstechnik zu finden, wenn sehr schnelle Anfahrzeiten und Abbremszeiten (letzteres beispielsweise zur genauen Positionierung) benötigt werden, wie in Liften, Förderbänder, Elektromobilen, Robotern usw.

Deshalb ist es Aufgabe der Erfindung, bei einer Vorrichtung zur reversiblen Speicherung von elektrischer Energie eine in bezug auf Kosten und Platzbedarf günstigere Lösung als bisher vorzuschlagen.

Zur Lösung dieser Aufgabe ist eine Vorrichtung zur reversiblen Speicherung von elektrischer Energie der eingangs genannten Art gekennzeichnet durch die im Anspruch 1 angegebene Kombination von Merkmalen. Ein Verfahren zum Betrieb dieser Vorrichtung ist gekennzeichnet durch die im Anspruch 7 angegebene Kombination von Verfahrensschritten. Vorteilhafte Weiterbildungen der Vorrichtung bzw. des Verfahrens sind in den abhängigen Anspruchen definiert.

Im Zusammenhang mit der Erfindung ist zu verstehen, dass die Abtastung der verschiedenen Spannungen und ströme mit einer Wiederholungsfrequenz, die wesentlich grösser ist als die Frequenz des Wechselstromnetzes, bei einem Wechselstromnetz von-50.Hz (beispielsweise beim Industriestrom) oder 400 Hz beispielsweise bei Flugzeugen) typisch zwischen 20 kHz und 100 kHz erfolgt. Frequenzwerte unterhalb von 20 kHz sind zwar auch noch verwendbar, sie können aber schon unterhalb der oberen Hörgrenze des menschlichen Ohres liegen, was unangenehme Konsequenzen haben kann. Auch Frequenzwerte oberhalb von 100 kHz sind auch noch verwendbar, jedoch werden die technischen Probleme bei der Realisierung der Schaltungen bei steigenden Frequenzwerten immer schwieriger zu lösen.

Im Rahmen dieser Erfindung liegt auch die Verwendung eines bürstenlosen, elektronisch kommutierten Scheibenläufermotors mit am Läufer angeordneten Permanentmagneten und am Ständer angeordneten eisenlosen Wicklungen als Energiespeicher bei der reversiblen Speicherung von elektrischer Energie durch deren reversible Umwandlung in kinetische Energie in einem Scheibenläufermotor, wobei die elektrische Energie aus einem Wechselstromnetz von vorbestimmter Frequenz bezogen bzw. in das Wechselstromnetz zurückgespeist wird. Ein bürstenloser, elektronisch kommutierter Scheibenläufermotor auf Englisch "pancake motor") ist an sich bekannt, beispielsweise aus dem Artikel von M. Salami in Antriebstechnik 30/8 (1991), und im Handel erhältlich. Im Zusammenhang mit den am Läufer des Scheibenläufermotors angeordneten Permanentmagneten und den am Ständer des Scheibenläufermotors angeordneten eisenlosen Wicklungen wird auch auf die Patentdokumente US-4187441, JP-61-185050, JP-01-253211, DE-2143752 und/oder DE-2345150 verwiesen.

Mit der Erfindung wird es bei Antriebseinheiten für Hybrid-Elektromobile möglich, eine sehr leistungsfähige und Kompakce Antrebseinheit mit der erfindungsgemassen Vorrichtung, einem Akkumulator, Kondensatoren und einem Verbrennungsmotor zu bilden, was mit der bisherigen Technik zu einem zu schweren Fahrzeug führt.

Auch wird es mit der Erfindung möglich, verklemmte Förderbänder und dergleichen mit einer kurzzeitigen sehr starken Leistung anzufahren, insbesondere wenn das Verklemmen auf Reibung im Stillstand zurückzuführen ist.

Zudem wird es mit der Erfindung möglich, einen Lift und dergleichen bei Stromausfall noch zum nächsten Stockwerk oder zum untersten Stockwerk zu fahren.

Ausserdem erlaubt es die Erfindung, durch Kopplung des als Elektromotor ausgebildeten Energiespeichers mit einem mechanischen Antrieb bei erschwinglichen Kosten beispielsweise kleine häuserblock-Heizungen mit der Möglichkeit zu versehen, als Kleinkraftwerke zu wirken und somit bei Stromausfall als Notstromaggregat zu dienen. So werden auch mit Wind oder Wasser angetriebene Kleinkraftwerke wie auch Notstromaggregate kleiner und günstiger, vor allem können die Notstromaggregate auch als Wellenform-Reiniger und Phasenkorrektur für das Wechselstromnetz eingesetzt werden.

Das Wesen der Erfindung liegt in der unmittelbaren und reversiblen Umwandlung zwischen in einem Elektromotor gespeicherter kinetischer Energie und elektrischer Energie jeder beliebigen Spannung und Frequenz. Grundsätzlich wird die Wicklung des Elektromotors direkt als Speicherdrossel verwendet, so dass es möglich wird, bei einer verdoppelten (d.h. hin und zurück durchgeführten) Wandlung unmittelbar Wechselstrom in Wechselstrom ohne den Umweg über Gleichstrom und Umrichter umzuwandeln. Daraus ergibt sich eine bedeutende Einsparung an Kosten und Gewicht.

Ausserdem kann die Wicklung des Elektromotors kurzzeitige Überlastungen ertragen bzw. Überströme liefern, welche die Umrichter nicht ertragen würden. Deshalb braucht der Elektromotor nicht für hohe Spitzenwerte der Leistung, sondern im wesentlichen nur für deren Durchschnittswerte mit einem viel tieferen Verhältnis der Spitzenleistung zur Leistung im Dauerbetrieb als bei den bisher verwendeten Anlagen mit Elelktromotoren und Umrichtern ausgelegt zu werden. Daraus ergibt sich eine weitere bedeutende Einsparung an Kosten und Gewicht.

Die im Läufer des Elektromotors gespeicherte kinetische energie steigt im Verhältnis des Quadrats der Drehzahl des Läufers, so dass die erfindungsgemässe Verwendung eines bürstenlosen, elektronisch kommutierten Scheibenläufermotors mit am Läufer angeordneten Permanentmagneten und am Ständer engeordneten eisenlosen Wicklungen als Energiespeicher bei gleicher Leistung zu einer bedeutenden Einsparung an Kosten und Gewicht führt. Ein solcher Scheibenläufermotcr ist nämlich fähig, bei sehr hohen Drehzahlen zu laufen, und seine Steuerung wird dadurch erleichtert, dass sein Läufer ein geringes Gewicht und eine geringe Trägheit hat und deshalb mit grossen Drehzahldifferenzen auf die Zufuhr oder Entnahme von elektrischer Energie reagiert.

Die erfindungsgemässe Vorrichtung und deren Betriebsverfahren können für verschiedene Betriebsarten optimiert werden, beispielsweise für konstante Drehzahl oder konstantes Drehmoment oder grösstmögliches Drehmoment an der Motorwelle, bestmögliche Qualität oder kleinstmögliche Rückwirkungen auf das Wechselstromnetz (in bezug auf Abweichungen bzw. Verzerrungen von Spannung, Wellenform, Frequenz, Phase usw.), grösstmögliche Leistung, grösstmöglicher Wirkungsgrad, usw.

Beim Phasenschiebebetrieb ist die erfindungsgemässe Vorrichtung und deren Betriebsverfahren insbesondere in Verbindung mit der Verwendung von Supraleitern von Interesse, da der Hauptteil aller im Scheibenläufermotor auftretenden Verluste im ohmschen Widerstand der am Ständer angeoraneten eisenlosen Wicklungen auftritt. Diese Verlustwärme muss abgeführt werden, was bei den tiefen Temperaturen der Supraleiter generell sehr aufwendig ist, jedoch bei einem Scheibenläufermotor mit am Ständer angeordneten eisenlosen Wicklungen weit weniger aufwendig ist als bei den herkömmlichen Elektromotoren.

Bei einer Betriebsart zur Erreichung der grösstmöglichen Leistung wird angestrebt, möglichst viel Energie reversibel zwischen der elektrischen und der kinetischen Form umzuwandeln. Dies entspricht einem Störfall und/oder Notbetrieb, der eher selten auftritt und auf den im allgemeinen eine längere Abkühlphase folgt. Beispielsweise handelt es sich um Situationen, wo ein Lift wegen Überlast steckenbleibt und die Fahrt is zum nächsten Stockwerk fortzusetzen ist, oder Situationen, wo ein Förderband nach langem Stillstand verklebt, verharzt oder durch die Gummiteile verhärtet ist und mit einem Ruck in Gang zu bringen ist, oder noch Situationen, wobei einem Windkraftwerk eine Böe sich auswirkt, bis sich die Richtung oder den Anstellwinkel des Rotcrs entsprechend ändern. Hier wird die Leistung durch die höchstzulässigen Werte begrenzt: höchstzulässiger Strom im Netz und in den Einrichtungen zur elektronischen Kommutierung des Scheibenläufermotors, höchstzulässige Temperatur der Wicklungen im Ständer des Scheibenläufermotors. In Kauf genommen werden dabei die wegen der Rückwirkungen auf das Wechselstromnetz auftretenden Verzerrungen von Phase und Wellenform (wie Stromspitzen), sowie Störstrahlungen, wobei diese Störungen im allgemeinen nicht grösser sind als diejenigen, welche durch Gewitter, Lichtbogen, Einschaltung oder Ausschaltung starker Geräte, Erdschlüssen und dergleichen verursacht werden und im Prinzip vom Netz verkraftet werden sollten.

Bei einer Betriebsart zur Erreichung der grösstmöglichen Bremswirkung wird angestrebt, möglichst viel kinetische Energie zu verbrauchen, indem sie in die elektrische Form oder in Wärme umgewandelt wird. Letzteres ist klar ein Notbetriebsfall. Bei dieser Betriebsart wird normalerweise der Scheibenläufermotor zum Generator umfunktioniert, und die so erzeugte elektrische Energie wird in das Wechselstromnetz zurückgespeist. Wahlweise kann die erzeugte elektrische Energie über Stromleiter eines Hilfsnetzes in eine Batterie eingespeist oder in einem widerstand in Wärme umgewandelt werden. Handelt es sich aber beim Störfall um einen Netzausfall, ist es nicht möglich, die erzeugte elektrische Energie in das Wechselstromnetz zurückzuspeisen, da einerseits die Netzspannung auf Null sinkt und somit das Netz keine Leistung aufnimkt, andererseits diese Zurückspeisung im allgemeinen durch Vorschriften verboten ist. In einem solchen Spezialfall, bei dem die Rückführung von Energie nicht möglich ist, kann die Steuerung der-Schalter so erfolgen, dass im Hinblick auf den Wirkungsgrad möglichst ungünstige Bedingungen geschaffen werden. Beispielsweise kann herbeigeführt werden, *dass* eine Wicklung des Läufers einen Strom erzeugt, der mit "verkehrter" Polung einer anderen Wicklung eingespeist wird, um dem Drehfeid im Scheibenläufermotor entgegenzuwirken, d.h. die eine Wicklung bremst und die andere Wicklung treibt an, was im Normalfall widersinnig wäre. Die kinetische Energie geht dann in den Verlustwiderständen der Wicklungen des Scheibenläufermotors und in den Schaltern (Halbleiter-Schaltelemente wie IGBT) als Wärme verloren. Natürlich bedürfen die so erwärmten Elemente einer entsprechenden Abkühlungspause, bis ihr Betrieb wieder aufgenommen werden darf. Beispielsweise handelt es sich bei solchen Spezialfall um Situationen, wo bei einem Lift während der Fahrt der Strom ausfällt und die Erfindung ermöglicht, die Fahrt trotzdem bis zum nächsten Stockwerk abbremsend fortzusetzen, oder Situationen, wo ein Förderband bei Stromausfall sanft oder abrupt zu stoppen ist, oder ein Elektromobil nach Durchbrennen der Batteriesicherung oder Abschalten des Hauptschalters immer noch abbremsbar sein soll, wobei die Notspeisung des Anti-Blockier-Systems dessen Wirksamkeit aufrechterhält, oder noch Situationen, wo bei einem Windkraftwerk beim Aufkommen einer Böe elektrische Energie als Wärme aufzubrauchen ist, damit der Rotor nicht auf unzulässig hohe Drehzahlen beschleunigt wird. Bei einer Betriebsart zur Erreichung kleinstmöglicher Rückwirkungen auf das Wechselstromnetz (kleinstmögliche Abweichungen bzw. Verzerrungen von Spannung, Wellenform, Frequenz, Phase usw.) kann die Steuerung der Schalter so erfolgen, dass Wicklungsteile als Speicherdrossel wirken, um Stromspitzen aufzunehmen oder zu liefern, die somit nicht vom Wechselstromnetz aufgenommen oder geliefert werden. In Kauf genommen wird Dabei, dass in den Verlustwiderständen der Wicklungen des Scheibenläufermotors und in den Schaltern (Halbleiter-Schaltelemente wie IGBT) Energie als Wärme verlorengeht. Bei dieser Betriebsart reagiert die erfindungsgemässe Vorrichtung auf Spannungsabweichungen nicht möglichst schnell, der Scheibenläufermotor verhält sich wie hochohmig mit dem Netz verbunden. Folglich treten auch bei plötzlichen Schwankungen der Spannung und/oder der Frequenz keine hohen Ströme auf. Beim Inselbetrieb mit Zusammenschluss mehrerer Kleinkraftwerke ist das Einkoppeln der erfindungsgemässen Vorrichtung mit als Generator wirkendem Scheibenläufermotor leicht zu bewerkstelligen, die Netzzuleitung braucht keine Überstromwerte zu bewältigen und kann entsprechend knapp ausgelegt werden, in Kauf genommen wird dabei, dass der Betrieb nicht mit dem bestmöglichen Wirkungsgrad erfolgt, es treten entsprechende Energieverluste und Erwärmung auf.

Bei einer Betriebsart zur Erreichung bestmöglicher Qualität des Wechselstromnetzes in bezug auf Abweichungen bzw. Verzerrungen von Spannung, Wellenform, Frequenz, Phase usw. wird die erfindungsgemässe Vorrichtung "hart" an das Wechselstromnetz angeschlossen, d.h. jeder Abweichung bzw. Verzerrung wird möglichst schnell entgegengewirkt. Wenn beispielsweise ein Verbraucher eine induktive Blindlast erzeugt, gleicht die erfindungsgemässe Vorrichtung die entsprechenden Abweichungen bzw. Verzerrungen innerhalb ihrer (naturgemäss begrenzten) Möglichkeiten aus. Dieser Ausgleich führt zu mechanischen Abweichungen bzw. Verzerrungen von Drehmoment und Drehgeschwindigkeit und erzeugt entsprechende Kräfte, die sich auf den Ständer des Scheibenläufermotors übertragen und von seinem Gehäuse aufzunehmen sind. In Kauf genommen wird dabei, dass Kommandos einer Rundsteuerung im Netz zu erkennen und vor der Wirkung der erfindungsgemässen Vorrichtung zu schützen sind, da die erfindungsgemässe Vorrichtung sonst die Kommandos der Rundsteuerung als Störungen erkennen und bestmöglich beseizigen wurde. Wahlweise kann die den Störungen entsprechende elektrische Energie über Stromleiter eines Hilfsnetzes mit einer Batterie gepuffert werden, und zwar bei kleineren Leistungen beinahe bis zum Stillstand des Läufers des Scheibenläufermotors. In diesem Zusammenhang ist die Tatsache, dass die erfindungsgemässe Vorrichtung erlaubt, kleine Häuserblock-Heizungen mit der Möglichkeit zu versehen, als Kleinkraftwerke zu wirken und somit bei Stromausfall als Notstromaggregat zu dienen, von besonderem Interesse: wenn solche Kleinkraftwerke in genügender Anzahl im Verbund zusammengeschaltet sind, wird auch eine Notstromversorgung von ganzen Leitungsabschnitten über eine gewisse Zeit möglich. Ebenfalls ergibt sich, dass durch die Verminderung der Blindleistung im Netz auch die Verluste in den Leitungen vermindert werden, was an abgelegen Orten mit schwachen Zuleitungen die Stabilität der Netzspannung verbessert.

Ein Normalbetrieb der erfindungsgemässen Vorrichtung ist im Kompromiss zwischen den vorangehend erwähnten, zum Teil gegensätzlichen Funktionen und Eigenschaften zu erblicken.

Nachstehend werden Ausbildungsbeispiele der Erfindung unter Bezugnahme auf die Zeichnung näher erläutert. Es zeigen:
- Fig. 1: ein elektrisches Blockschema eines Ausbildungsbeispiels der erfindungsgemässen Vorrichtung, und
- Fig. 2: ein elektrisches Blockschema eines weiterem Ausbildungsbeispiels der erfindungsgemässen Vorrichtung.

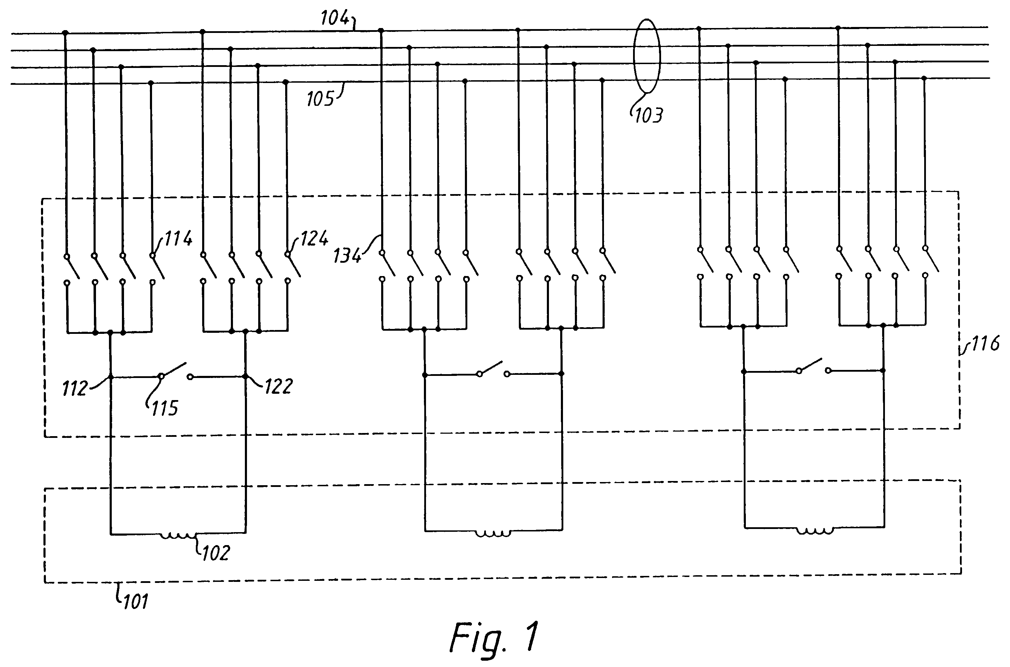

Bezugnehmend auf Fig, 1 ist mit dem Block 101 ein bürstenloser, elektronisch kommutierter Scheibenläufermotor (auf Englisch "pancake motor") schematisch bezeichnet. Wie bereits erwähnt, ist ein solcher Scheibenläufermotor an sich bekannt, wie auch dessen Ausgestaltung mit am Läufer angeordneten Permanentmagneten und am Ständer angeordneten eisenlosen Wicklungen. Aus diesem Grund braucht dieser Scheibenläufermotor hier nicht näher beschrieben zu werden. In der Ausbildung nach Fig. 1 ist dieser Scheibenläufermotor 101 dreiphasig ausgebildet und mit drei Wicklungen versehen, die schematisch dargestellt und mit 102 bezeichnet sind. Die einzelnen Wicklungen 102 sind mit je einem zugeordneten Paar von Klemmen versehen, die mit 112 und 122 bezeichnet sind.

Es ist zu verstehen, dass die dreiphasige Ausbildung des Scheibenläufermotor 101 mit drei Phasen U, V, W als Beispiel gegeben wird, denn der Scheibenläufermotor 101 kann mit jeder beliebigen und zweckmässigen Anzahl Phasen versehen sein.

Weiterhin bezugnehmend auf Fig. 1 ist ein dreiphasiges Wechselstromnetz 103 mit einer Frequenz von 50 Hz schematisch durch drei Phasenleiter 104 und einen Sternpunktleiter 105 dargestellt.

Auch hier ist zu verstehen, dass die dreiphasige Ausbildung des Wechselstromnetzes mit drei Phasen R, S, T und einem Sternpunktleiter N bei der Frequenz von 50 Hz als Beispiel gegeben wird, denn das Wechselstromnetz kann mit jeder beliebigen und zweckmässigen Anzahl Phasen versehen sein und bei jeder beliebigen und zweckmässigen Frequenz, beispielsweise auch bei 400 Hz, betrieben werden.

Zudem besteht bei dem hier beschriebenen Ausbildungsbeispiel der Erfindung kein Zusammenhang zwischen der Anzahl Phasen des Scheibenläufermotors 101 und der Anzahl Phasen des Wechselstromnetzes 103.

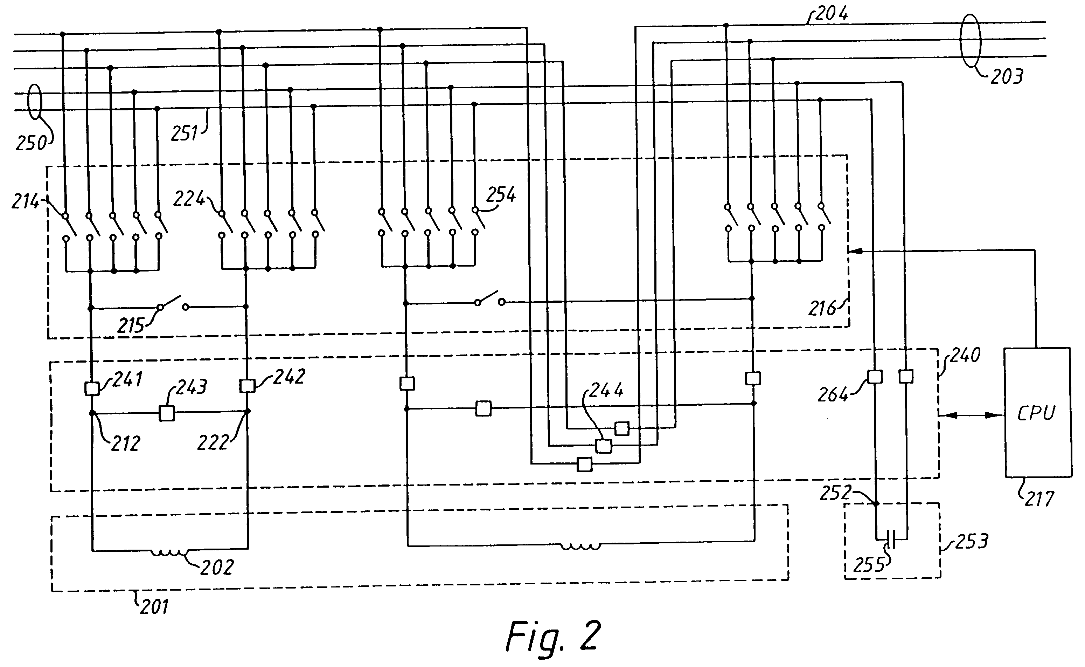

Jede Klemme 112 und 122 jeder Wicklung 102 ist über einen zugeordneten steuerbaren Schalter 114, 124, 134 mit jedem der Phasenleiter 104 des Wechselstromnetzes 103 sowie mit dem Sternpunktleiter 105 verbindbar. Zudem sind die beiden Klemmen 112 und 122 jeder Wicklung 102 über einen zusätzlichen zugeordneten steuerbaren Schalter 115 miteinander verbindbar. Bezugnehmend auf Fig. 2 ist darin der bürstenlose, elektronisch Kommutierte Scheibenläufermotor mit dem Block 201 schematisch bezeichnet. Zur besseren Veranschaulichung der Erfindung durch ein anderes Ausbildungsbeispiel ist dieser Scheibenläufermotor 201 hier zweiphasen mit zwei Phasen U ausgebildet und mit zwei Wicklungen versehen, die schematisch dargestellt und mit 202 bezeichnet sind. Die einzelnen Wicklungen 202 sind mit je einem zugeordneten Paar von Klemmen versehen, die mit 212 und 222 bezeichnet sind.

Weiterhin bezugnehmend auf Fig. 2 ist ein dreiphasiges Wechselstromnetz 203 mit einer Frequenz von beispielsweise 50 Hz oder 400 Hz schematisch durch drei Phasenleiter 204 ohne Sternpunktleiter dargestellt.

Damit wird klargestellt, dass auch bei dem hier beschriebenen Ausbildungsbeispiel der Erfindung kein Zusammenhang zwischen der Anzahl Phasen des Scheibenläufermotor 201 und der Anzahl Phasen des Wechselstromnetzes 203 besteht.

Jede Klemme 212 und 222 jeder Wicklung 202 ist über einen zugeordneten steuerbaren Schalter 214, 224 mit jedem der Phasenleiter 204 des Wechselstromnetzes 203 verbindbar. Zudem sind die beiden Klemmen 212 und 222 jeder Wicklung 202 über einen zusätzlichen zugeordneten steuerbaren Schalter 215 miteinander verbindbar. Die Schalter 214, 215, 224 sind Teil einer gesamten Schaltergruppe 216, sie werden jedoch einzeln von einer Einrichtung 217 gesteuert, die im wesentlichen aus einem Mikroprozessor besteht oder zumindest einen Mikroprozessor umfasst.

In einer Gruppe 240 von Messeinrichtungen sind Messwertgeber 241, 242, 243 für die Spannung zwischen den beiden Klemmen 212, 222 der jeweiligen Klemmenpaare und für den Strom der jeweiligen Wicklung vorgesehen. Diese Messwertgeber werden der Einrichtung 217 auf solche Weise angesteuert, dass eine periodisch wiederholte Abtastung der betreffenden Spannungen und Ströme erfolgt. Die Frequenz dieser Abtastung ist, wie bereits dargelegt, wesentlich grösser als die Frequenz des Wechselstromnetzes und liegt bei einem Wechselstromnetz von 50 Hz (beispielsweise beim Idustrieszrom) oder 400 Hz (beispielsweise bei Flugzeugen) typisch zwischen 20 kHz und 100 kHz.

Ebenfalls in der von der Einrichtung 217 periodisch angesteuerten Gruppe 240 von Messeinricbtungen sind Messwertgeber 244 für die Spannung an den Phasenleitern 204 gegenüber einem anderen Phasenleiter 204 des Wechselstromnetzes 203 oder gegenüber einem (nicht eingezeichneten) Sternpunktleiter vorgesehen.

Die Einrichtung 217 umfasst nebst dem erwähnten Mikroprozessor auch noch Einrichtungen, welche erlauben, die abgetasteten momentanen Spannungen bzw. Ströme untereinander und/oder mit entsprechenden Schwellenwerten zu vergleichen und die erwähnten Schaiter in Abhängigkeit von dem momentanen Resultat dieser Vergleiche zu steuern. Natürlich ist zu verstehen, dass diese Vergleicheinrichtungen und Steuereinrichtungen oder Teile davon auch im Mikroprozessor ausgebildet sein können bzw. dass deren Funktion durch den Mikroprozessor ausgeübt werden kann.

Die im Zusammenhang mit Fig. 1 erwähnten Schalter 114, 115, 124, 134 sind Teil einer gesamten Schaltergruppe 116 und werden ebenfalls von einer Einrichtung der beschriebenen Art einzeln gesteuert: in Fig. 1 ist diese Einrichtung jedoch zur Vereinfachung der Darstellung nicht eingezeichnet. Zudem sind in dem in Fig. 1 dargestellten Ausbildungsbeispiel ebenfalls Messeinrichtungen bzw. Messwertgeber der gleichen Art wie bei dem in Fig. 2 dargestellten Ausbildungsbeispiel vorgesehen, auch diese Messeinrichtungen bzw. Messwertgeber sind jedoch zur Vereinfachung der Darstellung in Fig. 1 nicht eingezeichnet.

Der wesentliche Unterschied zwischen den Ausbildungsbeispielen der Erfindung nach den Figuren 1 und 2 besteht darin, dass im Ausbildungsbeispiel nach Fig. 2 ein Hilfsnetz 250 mit Stromleitern 251 vorgesehen ist. Jede Klemme 212 und 222 jeder Wicklung 202 ist über einen zugeordneten steuerbaren schalter 254 mit jedem der Stromleiter 251 des Hilfsnetzes 250 verbindbar. Auch die Schalter 251 sind Teil der gesamten Schaltergruppe 216, und auch sie werden einzeln von der bereits erwähnten Einrichtung 217 gesteuert.

Im Ausbildungsbeispiel nach Fig. 2 umfasst das Hilfsnetz 250 zwei Stromieiter 251, die mit je einer Klemme 252 eines Speichers 253 für elektrische Energie verbunden sind. Im Ausbildungsbeispiel nach Fig. 2 ist dieser Speicher 253 für elektrische Energie als Kondensator 255 ausgebildet, so dass die beiden Stromleiter 251 des Hilfsnetzes 250 schaltungsmässig über diesen Kondensator 255 miteinander verbunden sind. Es ist jedoch zu verstehen, dass der Speicher 253 für elektrische Energie auch auf andere Weise ausgebildet sein kann, beispielsweise als Akkumulator.

Ebenfalls in der von der Einrichtung 217 periodisch angesteuerten Gruppe 240 von Messeinrichtungen sind Messwertgeber 264 für die Spannung und gegebenenfalls den Strom an aen Stromleitern 251 des Hilfsnetzes 250 gegenüber einem anderen Phasenleiter 251 des Hilfsnetzes 250 oder gegenüber einem nicht eingezeichneten) Sternpunktleiter des Hilfsnetzes 250 vorgesehen.

Zur Erleichterung der Ubersicht über die nun folgende Beschreibung des Verfahrens zum Betrieb der im vorangehenden beschriebenen Vorrichtung wird darauf hingewiesen, dass die erfindungsgemäss Vorrichtung generell auf solche Weise betrieben wird, dass zu entsprechenden Zeiten, wo es die momentan herrschenden Zustände der verschiedenen Spannungen und Ströme erlauben,
a) Energie dem Netz entnommen und im Elektromotor gespeichert wird, oder
b) Energie dem Elektromotor entnommen und in das Netz eingespeist wird, oder
c) zwischen dem Elektromotor und dem Netz keine Energie fliesst,
wobei gegebenenfalls
d) Energie dem Elektromotor entnommen und in dem an das Hilfsnetz angeschlossenen Energiespeicher eingespeist wird, oder
e) Energie dem an das Hilfsnetz angeschlossenen Energiespeicher entnommen und in den Elektromotor zurückgespeichert wird, oder
f) zwischen dem Elektromotor und dem an das Hilfsnetz angeschlossenen Energiespeicher keine Energie fliesst.
Zu diesem Zweck erfolgt mit der bereits erwähnten Wiederholungsfrequenz und mittels der bereits erwähnten Messeinrichtungen:
- eine periodische Abtastung der momentanen Spannung an den-Phasenleitern des wechselstromnetzes gegenüber dem Sternpunktleiter oder einem anderen Phasenleiter mit anschiiessender Ermittlung der Phasenleiter, deren momentane Spannung den absolut grössten momentanen positiven bzw. negativen Wert aufweist;
- eine periodische Abtastung der momentanen Spannung an jeder Wicklung zwischen den entsprechenden beiden Klemmen mit anschliessender Ermittlung der momentan positiven bzw. negativen Klemme des Klemmenpaares; und
- eine periodische Abtastung des momentanen Stromes in jeder Wicklung mit anschliessendem Vergleich des Absolutwerts dieses momentanen Stromes mit einem Schwellenwert.

Der vorstehend erwähnte Schwellenwert für den Strom in jeder Wicklung entspricht im wesentlichen dem Nennwert, weicher der Bauart des Elektromotors entspricht und vom Motorenherstellern angegeben wird. Abweichend davon kann der erwähnte Schwellenwert auch auf einen höheren Wert gesetzt werden, beispielsweise bis zum maximal zulässigen Strom, welcher der Bauart des Elektromotors entspricht. Solch ein hoher Schwellenwert kann beispielsweise dann verwendet werden, wenn der Mikroprozessor so programmiert wird, dass er den entsprechenden Strom nur kurzzeitig durch die Wicklungen des Elektromotors fliessen lässt und eine hinreichende Abkühlung des Elektromotors gewährleistet ist.

Es ist dabei zu verstehen, dass in bezug auf die periodische Abtastung der momentanen Spannung an jeder Wicklung zwischen den entsprechenden beiden Klemmen entweder eine tatsächliche Messung erfolgen kann, oder es können die betreffenden Spannungswerte vom Mikroprozessor beispielsweise aufgrund von Angaben eines Winkelkodierers für die momentane Position, Drehzahl und Drehbeschleunigung des Läufers im Elektromotor und von eingegebenen Tabellen von momentan möglichen Zustandswerten des Elektromotors errechnet werden. Diese zweitgenannte Möglichkeit ist viel weniger aufwendig als die erste, dennoch genügt sie zur Lösung der Aufgabe der Erfindung.

- Aufgrund der Ergebnisse der vorstehend angegebenen Abtastungen, Ermittlungen und Vergleiche ist die vorstehend beschriebene Einrichtung (Einrichtung 217 bei den in Fig. 2 dargestellten Ausbildungsbeispiel) programmiert, um folgende Verfahrensschritte auszuführen und Entscheidungen zu treffen:
- Wenn der Absolutwert des momentanen Stromes in einer Wicklung kleiner wird als der Schwellenwert, Betätigung der Schalter zum Unterbrechen bestehender Verbindungen der beiden Klemmen der entsprechenden Wicklung und zum Erstellen einer Verbindung der momentan positiven Klemme mit dem Phasenleiter, der den absolut grössten momentanen positiven Spannungswert aufweist, und der momentan negativen Klemme mit dem Phasenleiter, der den absolut grössten momentanen negativen Spannungswert aufweist; und
- Wenn der Absolutwert des momentanen Stromes in einer Wicklung gleich oder grösser wird als der Schwellenwert, Betätigung der Schalter zum Unterbrechen bestehender Verbindungen der beiden Klemmen der entsprechenden Wicklung und zum Erstellen einer Verbindung dieser beiden Klemmen mit entsprechenden Klemmen einer Einrichtung zur Umwandlung von im Elektromotor in kinetischer Form gespeicherter Energie in eine andere Form von Energie.
In einem ersten Ausbildungsbeispiel der erwähnten Einrichtung zur Umwandlung von im Elektromotor in kinetischer Form gespeicherter Energie in eine andere Form von Energie umfasst diese Umwandlungseinrichtung ganz einfach die Wicklung und einen Kurzschluss, d.h. die betreffenden Energieumwandlung wird durch Erstellen einer verbindung zwischen den beiden Klemmen der entsprechenden Wicklung über den im vorangehenden beschriebenen zusätzlichen Schalter herbeigeführt. Dadurch wird im Elektromotor mechanische Energie (im Zusammenhang mit der Drehung des läufers) in elektrische Energie (im Zusammenhang mit dem Strcm durch die Wicklung) umgewandelt, wobei die kinetische Form erhalten bleibt. Obschon auch ohmsche Verluste auftreten, wirken sich diese beim erfindungsgemässen Verfahren nicht wesentlich aus, so dass die irreversible Umwandlung von kinetischer Energie in Wärme nicht ins Gewicht fällt und darauf nicht weiter eingegangen wird. Der Strom durch die Wicklung beeinflusst dann auf die vom Mikroprocessor verlangte Weise die Drehung des Läufers des Elektromotors und somit den Strom durch die anderen Wickiungen des Elektromotors, was sich auf den Austausch von Energie zwischen dem Wechselstromnetz und dem Elektromotor auswirkt.

Zum genau gleichen Resultat führt, in einem anderen Ausbildungsbeispiel, eine Verbindung zwischen den beiden Klemmen der entsprechenden Wicklung nicht direkt miteinander über den zusätzlichen Schalter, sondern über je einen Schalter mit einem und demselben Phasenleiter des Wechselstromnetzes. Auch hier die erwähnte Umwandlungseinrichtung ganz einfach die Wicklung und einen Kurzschluss.

Zu einem analogen Resultat führt, in einem noch anderen Ausbildungsbeispiel, eine Verbindung zwischen den beiden Klemmen der entsprechenden Wicklung nicht direkt miteinander oder mit einem und demselben Phasenleiter des Wechselstromnetzes, sondern über je einen Schalter mit je einem Phasenleiter des Wechselstromnetzes. Dadurch wird Energie vom Elektromotor in das Wechselstromnetz zurückgespeist, was ja ein Austausch von Energie zwischen dem Wechselstromnetz und dem, Elektromotor darstellt. Die erwähnte Umwandlungseinrichtung umfasst hier im wesentlichen die Wicklung und den Generator, der dem Wechselstromnetz die elektrische Energie liefert. In diesem Ausbildungsbeispiel ist die vorstehend beschriebene Einrichtung (Einrichtung 217 bei dem in Fig. 2 dargestellten Ausbildungsbeispiel) vorzugsweise programmiert, um aufgrund der Ergebnisse der vorstehend angegebenen Abtastungen, Ermittlungen und Vergleiche folgende Verfahrensschritte aus zuführen und Entscheidungen zu treffen:
- Bestimmung eines Absolutwerts der momentanen Spannung zwischen Paaren von Phasenleitern des Wechselstrommetzes;
- Ermittlung eines Paares von Phasenleitern des Wechselstromnetzes, dem ein kleinster Absoiutwert der momentanen Spannung entspricht;
- Verbindung je einer der beiden Klemmen mit je einem Phasenleiter des so ermittelten Paares, und dies vorzugsweise durch Verbindung der momentan positiven Klemme mit dem momentan positiven Phasenleiter und der momentan negativen Klemme mit dem momentan negativen Phasenleiter.
Bei dem in Fig. 2 dargestellten Ausbildungsbeispiel, in dem ein Hilfsnetz vorgesehen ist, ist die vorstehend beschriebene Einrichtung 217 programmiert, um aufgrund der Ergebnisse der vorstehend angegebenen Abtastungen, Ermittlungen und Vergleiche folgende weitere Verfahrensschritte auszuführen und Entscheidungen zu treffen:
- Abtastung der momentanen Spannung zwischen einem Paar von Stromleitern des Hilfsnetzes und Vergleich eines Absolutwerts dieser momentanen Spannung mit dem Absolutwert der momentanen Spannung zwischen den beiden Klemmen einer Wicklung;
- Wenn der Absolutwert des momentanen Stroms in einer Wicklung kleiner wird als der Schwellenwert,
   - und wenn der Absolutwert der momentanen Spannung zwischen den beiden Klemmen der betreffenden Wicklung gleich oder grösser wird als der Absolutwert der momentanen Spannung zwischen den beiden entsprechenden Phasenleitern des Wechselstromnetzes,
      Betätigung der Schalter zum Unterbrechen bestehender Verbindungen der beiden Klemmen der betreffenden Wicklung und zum Erstellen einer Verbindung der momentan positiven bzw. negativen Klemme der entsprechenden Wicklung mit dem entsprechenden positiven bzw. negativen Stromleiter des Hilfsnetzes,
   - und wenn hingegen der Absolutwert der momentanen Spannung zwischen den beiden Klemmen der betreffenden Wicklung kleiner wird als der Absolutwert der momentanen Spannung zwischen den beiden entsprechenden Phasenleitern des Wechselstromnetzes,
      Betätigung der Schalter zum Unterbrechen bestehender Verbindungen der beiden Klemmen der betreffenden Wicklung und zum Erstellen einer Verbindung der momentan positiven Klemme der betreffenden Wicklung mit dem Phasenleiter, der den absolut grössten momentanen positiven Spannungswert aufweist, und einer Verbindung der momentan negativen Klemme der betreffenden Wicklung mit dem Phasenleiter, der den absolut grössten momentanen negativen Spannungswert aufweist;
- Wenn der Absolutwert des momentanen Stroms in einer Wicklung gleich oder grösser wird als der Schwellenwert,
   - und wenn die abgetastete momentane Spannung zwischen den beiden Klemmen der betreffenden Wicklung mit kleiner wird als die abgetastete momentanen Spannung zwischen den beiden entsprechenden Stromleitern des Hilfsnetzes,
      Betätigung der Schalter zum Unterbrechen bestehender Verbindungen der beiden Klemmen der betreffenden Wicklung mit und zum Erstellen einer Verbindung der momentan positiven bzw. negativen Klemme der betreffenden Wicklung mit dem entsprechenden positiven bzw. negativen Stromleiter des Hilfsnetzes,
   - und wenn hingegen die abgetastete momentane Spannung zwischen den beiden Klemmen der betreffenden Wicklung mit gleich oder grösser wird als die abgetastete momentanen Spannung zwischen den beiden entsprechenden Stromleitern des Hilfsnetzes,
      Betätigung der Schalter zum Unterbrechen bestehender Verbindungen der beiden Klemmen der betreffenden Wicklung mit und zum Erstellen einer Verbindung dieser beiden Klemmen mit den entsprechenden Klemmen der genannten Einrichtung zur Umwandlung von Energie.
Hier umfasst die Umwandlungseinrichtung im wesentlichen die Wicklung und das Hilfsnetz mit dem daran angeschlossenen Speicher für elektrische Energie, der wie bereits beschrieben ein Kondensator oder ein Akkumulator sein kann. In diesem Ausbildungsbeispiel ist die vorstehend beschriebene Einrichtung 217 vorzugsweise programmiert, um aufgrund der Ergebnisse der vorstehend angegebenen Abtastungen, Ermittlugen und Vergleiche die Energieumwandlung durch Erstellen einer Verbindung der momentan positiven Klemme der Wicklung mit dem momentan negativen Stromleiter des Hilfsnetzes und der momentan negativen Klemme der Wicklung mit dem momentan positiven Stromleiter des Hilfsnetzes herbeizuführen.

Dem Fachmann auf dem Gebiet der Erfindung wird erkennbar sein, dass im Rahmen der Erfindung manche Änderungen der Verfahrensschritte sowie zusätzliche Verfahrensschritte und weitere Massnahmen vorgesehen werden können, ohne dabei die Lehre der Erfindung zu verlassen.

So kann es zweckmässig sein, wenn der Speicher für elektrische Energie ein Akkumulator ist, Massnahmen zu treffen, um diesen nicht zu überladen. Beispielsweise kann die Ladung des Akkumulators von den Messwertgebern 264 für Spannung und Strom an den Stromleitern 251 des Hilfsnetzes 250 und vom Mikroprozessor 217 überwacht und die Schaltergruppe 216 vom Mikroprozessor 217 so gesteuert werden, dass der Akkumulator nicht überladen wird. In diesem Zusammenhang kann es zweckmässig sein, die Schaltergruppe 216 vom Mikroprozessor 217 so steuern zu lassen, dass keine elektrische Energie in das Hilfsnetz 250 eingespeist wird, wenn der Absolutwert der momentanen Spannung an den Stromleitern 251 des Hilfsnetzes 250 grösser wird als ein vorbestimmter oberer Schwellenwert, und keine elektrische Energie dem Hilfsnetz 250 entnommen wird, wenn der Absolutwert der momentanen Spannung an den Stromleitern 251 des Hilfsnetzes 250 kleiner wird als ein vorbestimmter unterer Schwellenwert.

## Patentansprüche

1. Vorrichtung zur reversiblen Speicherung von elektrischer Energie durch deren reversible Umwandlung in kinetische Energie in einem Elektromotor, wobei die elektrische Energie aus einem Wechselstromnetz (103) von vorbestimmter Frequenz bezogen bzw. in das Wechselstromnetz zurückgespeist wird, gekennzeichnet durch
• eine Ausbildung des Elektromotors als bürstenloser, elektronisch kommutierter Scheibenläufermotor (101) mit am Läufer angeordneten Permanentmagneten und am Ständer angeordneten eisenlosen Wicklungen (102),
wobei jede Wicklung mit einem Paar von Klemmen (112, 122) versehen ist, die jeweils über einen steuerbaren Schalter (114, 124, 134) zumindest mit einem Phasenleiter (104) des Wech-selstromnetzes verbindbar sind,
• Einrichtungen (244) zur wiederholten Abtastung einer momentanen Spannung an je einem Phasenleiter gegenüber einem Sternpunktleiter (105) oder einem anderen Phasenleiter des Wechselstromnetzes,
• Einrichtungen (243) zur wiederholten Abtastung einer momentanen Spannung zwischen den beiden Klemmen zumindest eines Klemmenpaares,
• Einrichtungen (241, 242) zur wiederholten Abtastung eines momentanen Stromes in je eine Wicklung,
• sowie eine Einrichtung (217) zum Vergleichen der abgetasteten momentanen Spannungen bzw. Ströme untereinander und mit entsprechenden Schwellenwerten und zur Steuerung der Schalter in Abhängigkeit von dem momentanen Resultat der Vergleiche.

2. Vorrichtung nach Anspruch 1, dadurch gekennzeichnet, dass die beiden Klemmen eines Klemmenpaares jeweils über einen zusätzlichen steuerbaren Schalter (115) direkt miteinander verbindbar sind.

3. Vorrichtung nach Anspruch 1, dadurch gekennzeichnet, dass die Einrichtung zum Vergleichen der abgetasteten momentanen Spannungen untereinander und mit entsprechenden Schwellenwerten und zur Steuerung der Schalter in Abhängigkeit von dem momentanen Resultat der Vergleiche einen Mikroprozessor (217) umfasst.

4. Vorrichtung nach einem der Ansprüche 1 bis 3, dadurch gekennzeichnet, dass zusätzlich zur Verbindung der Klemmen mit den Phasenleitern und gegebenenfalls mit dem Sternpunktleiter des Wechselstromnetzes über den jeweiligen steuerbaren Schalter die Klemmen jeweils über einen steuerbaren Schalter (254) mit mindestens einem Stromleiter eines Hilfsnetzes (250) verbindbar sind.

5. Vorrichtung nach Anspruch 4, dadurch gekennzeichnet, dass das Hilfsnetz mindestens zwei Stromleiter umfasst, die miteinander über einen Speicher (253) für elektrische Energie verbunden sind.

6. Vorrichtung nach Anspruch 5, dadurch gekennzeichnet, dass der Speicher für elektrische Energie ein Kondensator (255) oder ein Akkumulator ist.

7. Verfahren zum Betrieb der Vorrichtung nach Anspruch 1, gekennzeichnet durch folgende Verfahrensschritte:
• Abtastung (244) der momentanen Spannung an je einem Phasenleiter (104) des Wechselstromnetzes (103) gegenüber einem Sternpunktleiter (105) oder einem anderen Phasenleiter des Wechseltromnetzes und Ermittlung derjenigen Phasenleiter, deren momentane Spannung den absolut grössten momentanen positiven bzw. negativen Wert aufweist;
• Abtastung (243) der momentanen Spannung zwischen den beiden Klemmen jeden Klemmenpaares (112, 122) und Ermittlung einer momentan positiven bzw. negativen Klemme des Klemmenpaares;
• Abstastung (241, 242) des momentanen Stromes in jeder Wicklung und Vergleich eines Absolutwerts dieses momentanen Stromes mit einem Schwellenwert;
• Wenn der absolutwert des momentanen Stromes kleiner wird als der Schwellenwert,
Betätigung der Schalter zum Unterbrechen bestehender Verbindungen der beiden Klemmen des entsprechenden Klemmenpaares und zum Erstellen einer Verbindung der momentan positiven Klemme mit dem Phasenleiter, der den absolut grössten momentanen positiven Spannungswert aufweist, und der momentan negativen Klemme mit dem Phasenleiter, der den absolut grössten momentanen negativen Spannungswert aufweist;
• Wenn der Absolutwert des momentanen Stromes gleich oder grösser wird als der Schwellenwert,
Betätigung der Schalter zum Unterbrechen bestehender Verbindungen der beiden Klemmen des entsprechenden Klemmenpaares und zum Erstellen einer Verbindung dieser beiden Klemmen mit entsprechenden Klemmen einer Einrichtung zur Umwandlung von im Elektromotor in kinetischer Form gespeicherter Energie in eine andere Form von Energie;
wobei die Abtastung mit einer Wiederholungsfrequenz erfolgt, die wesentlich grösser ist als die Frequenz des Wechselstromnetzes.

8. Verfahren nach Anspruch 7, dadurch gekennzeichnet, dass die Energieumwandlung durch Erstellen einer Verbindung (115) zwischen den beiden Klemmen des entsprechenden Klemmenpaares herbeigeführt wird.

9. Verfahren nach Anspruch 8, dadurch gekennzeichnet, dass die beiden Klemmen über je einen Schalter (114, 124, 134) mit einem und demselben Phasenleiter des Wechselstromnetzes verbunden werden.

10. Verfahren nach Anspruch 8 zum Betrieb einer Vorrichtung, die nach Anspruch 2 ausgebildet ist, oaaurcn gekennzeichnet, dass die beiden Klemmen über den zusätzlichen Schalter (115) miteinander verbunden werden.

11. Verfahren nach Anspruch 8, dadurch gekennzeichnet, dass die beiden Klemmen über je einen Schalter (114, 124, 134) mit je einem Phasenleiter des Wechselstromnetzes verbunden werden.

12. Verfahren nach Anspruch 11, gekennzeichnet durch folgende Verfahrensschritte:
• Bestimmung eines Absolutwerts de momentanen Spannung zwischen Paaren von Phasenleitern (104) des Wechselstromnetzes (103),
• Ermittlung eines Paares von Phasenleitern des Wechseltromnetzes, dem ein kleinster Absolutwert der momentanen Spannung entspricht, und
• Verbindung je einer der beiden Klemmen mit je einem Phasenleiter des so ermittelten Paares.

13. Verfahren nach Anspruch 12, dadurch gekennzeichnet, dass die momentan positive Klemme mit dem momentan positiven Phasenleiter und die momentan negative Klemme mit dem momentan negativen Phasenleiter verbunden wird.

14. Verfahren nach Anspruch 7 zum Betrieb einer Vorrichtung, die nach einem der Ansprüche 4 bis 6 ausgebildet ist, gekennzeichnet durch folgende Verfahrensschritte:
• Abtastung (264) der momentanen Spannung zwischen einem Paar von Stromleitern des Hilfsnetzes (250) und Vergleich eines Absolutwerts dieser momentanen Spannung mit dem Absolutwert der momentanen Spannung zwischen den beiden Klemmen eines Klemmenpaares (112, 122);
• Wenn der Absolutwert des momentanen Stroms in einer Wicklung (102) kleiner wird als der Schwellenwert,
• und wenn der Absolutwert der momentanen Spannung zwischen den beiden Klemmen des Klemmenpaares gleich oder grösser wird als der Absolutwert der momentanen Spannung zwischen den beiden entsprechenden Phasenleitern des Wechselstromnetzes,
Betätigung der Schalter (114, 124, 134) zum Unterbrechen bestehender Verbindungen der beiden Klemmen des entsprechenden Klemmenpaares und zum Erstellen einer Verbindung der momentan positiven bzw. negativen Klemme des entsprechenden Klemmenpaares mit dem entsprechenden positiven bzw. negativen Stromleiter des Hilfsnetzes,
• und wenn hingegen der Absolutwert der momentanen Spannung zwischen den beiden Klemmen des Klemmenpaares kleiner wird als der Absoluwert der momentanen spannung zwischen den beiden entsprechenden Phasenleitern des Wechselstromnetzes,
Betätigung der Schalter (114, 124, 134) zum Unterbrechen bestehender Verbindungen der beiden Klemmen des entsprechenden Klemmenpaares und zum Erstellen einer Verbindung der momentan positiven Klemme des entsprechenden Klemmenpaares mit dem Phasenleiter, der den absolut grössten momentanen positiven Spannungswert aufweist, und einer Verbindung der momentan negativen Klemme des entsprechenden Klemmenpaares mit dem Phasenleiter, der den absolut grössten momentanen negativen Spannungswert aufweist;
• Wenn der Absolutwert des momentanen Stroms in einer Wicklung gleich oder grösser wird als der Schwellenwert,
• und wenn die abgetastete momentane Spannung zwischen den beiden Klemmen eines Klemmenpaares (112, 122) kleiner wird als die abgetastete momentanen Spannung zwischen den beiden entsprechenden Stromleitern des Hilfsnetzes,
Betätigung der Schalter zum Unterbrechen bestehender Verbindungen der beiden Klemmen des entsprechenden Klemmenpaares und zum Erstellen einer Verbindung der momentan positiven bzw. negaziven Klemme des entsprechenden Klemmenpaares mit dem entsprechenden positiven bzw. negativen Stromleiter des Hilfsnetzes (250),
• und wenn hingegen die abgetastete momentane Spannung zwischen den beiden Klemmen eines Klemmenpaares gleich oder grösser wird als die abgetastete momentanen Spannung zwischen den beiden entsprechnenden Stromleitern des Hilfsnetzes,
Betätigung der Schalter zum Unterbrechen bestehender Verbindungen der beiden Klemmen des entsprechenden Klemmenpaares und zum Erstellen einer Verbindung dieser beiden Klemmen mit den entsprechenden Klemmen der genannten Einrichtung zur Umwandlung von Energie.

15. Verfahren nach Anspruch 14, dadurch gekennzeichnet, dass die Energieumwandlung durch Erstellen einer Verbindung der momentan positiven Klemme mit dem momentan negativen Stromleiter des Hilfsnetzes (250) und der momentan negativen Klemme mit dem momentan positiven Stromleiter des Hilfsnetzes herbeigeführt wird.

16. Verwendung eines bürstenlosen, elektronisch kommutierten Scheibenläufermotors mit am Läufer angeordneten Permanentmagneten und am Ständer angeordneten eisenlosen Wicklungen als Energiespeicher bei der reversiblen Speicherung von elektrischer Energie durch deren reversible Umwandlung in kinetische Energie in einem Scheibenläufermotor, wobei die elektrische Energie aus einem Wechselstromnetz von vorbestimmter Frequenz bezogen bzw. in das Wechselstromnetz zurückgespeist wird.

## Claims

1. Device for the reversible storage of electric energy by its reversible conversion into kinetic energy in an electric motor, the electric energy being drawn from an a.c. power supply (103) of predetermined frequency and fed back into the a.c. power supply, characterized by
• a design of the electric motor as a brushless, electronically commutated pancake motor (101) with permanent magnets arranged on the rotor and coreless windings (102) arranged on the stator,
each winding being provided with a pair of terminals (112, 122), which can be connected in each case via a controllable switch (114, 124, 134) to at least one phase conductor (104) of the a.c. power supply,
• devices (244) for repeated sampling of an instantaneous voltage at one phase conductor each with respect to a neutral conductor (105) or another phase conductor of the a.c. power supply,
• devices (243) for the repeated sampling of an instantaneous voltage between the two terminals of at least one pair of terminals,
• devices (241, 242) for the repeated sampling of an instantaneous current in one winding each,
• and also a device (217) for comparing the sampled instantaneous voltages or currents with one another and with corresponding threshold values and for controlling the switches in dependence on the instantaneous result of the comparisons.

2. Device according to Claim 1, characterized in that the two terminals of a pair of terminals can be directly connected to each other in each case via an additional controllable switch (115).

3. Device according to Claim 1, characterized in that the device for comparing the sampled instantaneous voltages with one another and with corresponding threshold values and for controlling the switches in dependence on the instantaneous result of the comparisons comprises a microprocessor (217).

4. Device according to one of Claims 1 to 3, characterized in that, in addition to the connection of the terminals to the phase conductors and, if appropriate, to the neutral conductor of the a.c. power supply via the respective controllable switch, the terminals can be connected in each case via a controllable switch (254) to at least one current conductor of an auxiliary power supply (250).

5. Device according to claim 4, characterized in that the auxiliary power supply comprises at least two current conductors which are connected to each other via a store (253) for electric energy.

6. Device according to claim 5, characterized in that the store for electric energy is a capacitor (255) or a storage battery.

7. Process for operation of the device according to Claim 1, characterized by the following process steps:
• Sampling (244) of the instantaneous voltage at one phase conductor (104) each of the a.c, power supply (103) with respect to a neutral conductor (105) or another phase conductor of the a.c. power supply and determination of that phase conductor of which the instantaneous voltage has the greatest instantaneous positive or negative value in absolute terms;
• sampling (243) of the instantaneous voltage between the two terminals of each pair of terninals (112, 122) and determination of which terminal of the pair of terminals is positive or negative at that instant;
• sampling (241, 242) of the instantaneous current in each winding and comparison of an absolute value of this instantaneous current with a threshold value;
• if the absolute value of the instantaneous current becomes less than the threshold value,
actuation of the switches for interrupting existing connections of the two terminals of the corresponding pair of terminals and for establishing a connection of the terminal which is positive at that instant to the phase conductor which has the greatest instantaneous positive voltage value in absolute terms, and of the terminal which is negative at that instant to the phase conductor which has the absolutely greatest instantaneous negative voltage value;
• if the absolute value of the instantaneous current becomes equal to or greater than the threshold value,
actuation of the switches for interrupting existing connections of the two terminals of the corresponding pair of terminals and for establishing a connection of these two terminals to corresponding terminals of a device for the conversion of energy stored in the electric motor in kinetic form into another form of energy;
the sampling taking place with a repetition frequency which is substantially greater than the frequency of the a.c. power supply.

8. Process according to Claim 7, characterized in that the energy conversion is brought about by establishing a connection (115) between the two terminals of the corresponding pair of terminals.

9. Process according to Claim 8, characterized in that the two terminals are connected via a switch (114, 124, 134) each to one and the same phase conductor of the a.c. power supply.

10. Process according to Claim 8 for the operation of a device which is designed according to Claim 2, characterized in that the two terminals are connected to each other via the additional switch (115).

11. Process according to Claim 8, characterized in that the two terminals are connected via one switch (114, 124, 134) each to one phase conductor each of the a.c. power supply.

12. Process according to Claim 11, characterized by the following process steps:
• determination of an absolute value of the instantaneous voltage between pairs of phase conductors (104) of of the a.c. power supply (103),
• determination of a pair of phase conductors of the a.c. power supply to which a least absolute value of the instantaneous voltage corresponds, and
• connection of one of each of the two terminals to one phase conductor each of the pair thus determined.

13. Process according to Claim 12, characterized in that the terminal which is positive at that instant is connected to the phase conductor which is positive at that instant and the terminal which is negative at that instant is connected to the phase conductor which is negative at that instant.

14. Process according to Claim 7 for the operation of a device which is designed according to one of Claims 4 to 6, characterized by the following process steps:
• sampling (264) of the instantaneous voltage between a pair of current conductors of the auxiliary power supply (250) and comparison of an absolute value of this instantaneous voltage with the absolute value of the instantaneous voltage between the two terminals of a pair of terminals (112, 122);
• if the absolute value of the instantaneous current in a winding (102) becomes less than the threshold value,
• and if the absolute value of the instantaneous voltage between the two terminals of the pair of terminals becomes equal to or greater than the absolute value of the instantaneous voltage between the two corresponding phase conductors of the a.c. power supply,
actuation of the switches (114, 124, 134) for interrupting existing connections of the two terminals of the corresponding pair of terminals and for establishing a connection of that terminal of the corresponding pair of terminals which is positive at that instant or negative at that instant to the correspondingly positive or negative current conductor of the auxiliary power supply,
• and if, on the other hand, the absolute value of the instantaneous voltage between the two terminals of the pair of terminals becomes less than the absolute value of the instantaneous voltage between the two corresponding phase conductors of the a.c. power supply,
actuation of the switches (114, 124, 134) for interrupting existing connections of the two terminals of the corresponding pair of terminals and for establishing a connection of that terminal of the corresponding pair of terminals which is positive at that instant to the phase conductor which has the greatest instantaneous positive voltage value in absolute terms, and a connection of that teerminal of the corresponding pair of terminals which is negative at that instant to the phase conductor which has the greatest instantaneous negative voltage value in absolute terms;
• the instantaneous voltage in a winding becomes equal to or greater than the threshold value,
• and if the sampled instantaneous voltage between the two terminals a pair of terminals (112, 122) becomes less than the sampled instantaneous voltage between the two corresponding current conductors of the auxiliary power supply,
• actuation of the switches for interrupting existing connections of the two terminals of the corresponding pair of terminals and for establishing a connection of that terminal of the corresponding pair of terminals which is positive or negative at that instant to the corresponding positive or negative current conductor of the auxiliary power supply (250),
• and if, on the other hand, the sampled instantaneous voltage between the two terminals of a pair of terminals becomes equal to or greater than the sampled instantaneous voltage between the two corresponding current conductors of the auxiliary power supply,
actuation of the switches for interrupting existing connections of the two terminals of the corresponding pair of terminals and for establishing a connection of these two terminals to the corresponding terminals of the said device for the conversion of energy.

15. process according to Claim 14, characterized in that the energy conversion is brought about by establishing a connection of the terminal which is positive at that instant to that current conductor of the auxiliary power supply (250) which is negative at that instant, and of the terminal which is negative at that instant to that current conductor of the auxiliary power supply which is positive at that instant.

16. Use of a brushless, electronically commutated pancake motor with permanent magnets arranged on the rotor and coreless windings arranged on the stator as an energy store in the reversible storage of electric energy by its reversible conversion into kinetic energy in a pancake motor, the electric energy being drawn from an a.c. power supply of predetermined frequency and fed back into the a.c. power supply.

## Revendications

1. Dispositif pour le stockage réversible de l'énergie électrique par sa conversion réversible en énergie cinétique dans un moteur électrique, l'énergie électrique étant prélevée à partir d'un réseau à courant alternatif (103) de fréquence prédéterminée respectivement est réalimentée dans le réseau à courant alternatif, caractérisé
• par une conception du moteur électrique en tant que moteur à rotor à disques (101), commuté électroniquement et sans balai, comprenant des aimants permanents disposés sur le rotor et des enroulements non ferrugineux (102), disposés sur le stator,
chaque enroulement étant muni d'une paire de bornes (112, 122) qui sont susceptibles d'être reliées, chacune, par l'intermédiaire d'un interrupteur commandable (114, 124, 134) à un fil de phase (104) du réseau à courant alternatif,
• par des dispositifs (244) pour le balayage répété d'une tension momentanée appliquée au fil de phase vis-à-vis d'un fil neutre (105) ou d'un autre fil de phase du réseau à courant alternatif,
• par des dispositifs (243) pour le balayage répété d'une tension momentanée entre les deux bornes d'au moins une paire de bornes,
• par des dispositifs (241, 242) de balayage d'un courant momentané dans chaque enroulement,
• ainsi que par un dispositif (217) pour la comparaison des tensions respectivement des courants momentanés balayés entre eux et avec des valeurs de seuil correspondantes et pour la commande des interrupteurs en fonction du résultat momentané des comparaisons.

2. Dispositif selon la revendication 1, caractérisé en ce que les deux bornes d'une paire de bornes sont reliées directement entre elles par un interrupteur commandable supplémentaire (115).

3. Dispositif selon la revendication 1, caractérisé en ce que le dispositif, pour la comparaison des tensions momentanées balayées entre elles et avec des valeurs de seuil correspondantes et pour la commande des interrupteurs en fonction du résultat momentané des comparaisons, comprend un microprocesseur (217).

4. Dispositif selon l'une des revendications 1 à 3, caractérisé en ce qu'en plus de la liaison des bornes avec les fils de phase et éventuellement avec le fil neutre du réseau à courant alternatif par l'intermédiaire de l'interrupteur commandable respectif, les bornes peuvent être reliées chacune par un interrupteur commandable (254) à au moins un fil de courant d'un réseau auxiliaire (250).

5. Dispositif selon la revendication 4, caractérisé en ce que le réseau auxiliaire comprend au moins deux fils de courant qui sont reliés entre eux par l'intermédiaire d'un organe de stockage (253) pour l'énergie électrique.

6. Dispositif selon la revendication 5, caractérisé en ce que l'organe de stockage de l'énergie électrique est un condensateur (255) ou un accumulateur.

7. Procédé pour le fonctionnement du dispositif selon la revendication 1, caractérisé par les étapes de procédé suivantes :
• balayage (244) de la tension momentanée appliquée à chaque fil de phase (104) du réseau à courant alternatif (103) vis-à-vis d'un fil neutre (105) ou d'un autre fil de phase du réseau à courant alternatif et détermination des fils de phase dont la tension momentanée présente la valeur négative respectivement positive momentanée absolue la plus élevée en valeur absolue ;
• balayage (243) de la tension momentanée entre les deux bornes de chaque paire de bornes (112, 122) et détermination d'une borne momentanément positive respectivement négative de la paire de bornes ;
• balayage (241, 242) du courant momentané dans chaque enroulement et comparaison d'une valeur absolue de ce courant momentané avec une valeur de seuil ;
• lorsque la valeur absolue du courant momentané est inférieure à la valeur de seuil,
actionnement des interrupteurs pour l'interruption des liaisons existant entre les deux bornes de la paire de bornes correspondante et pour la réalisation d'une liaison de la borne momentanément positive avec le fil de phase qui présente la valeur de tension positive momentanée la plus grande en valeur absolue, et de la borne momentanément négative avec le fil de phase qui présente la valeur de tension négative momentanée la plus grande en valeur absolue ;
• si la valeur absolue du courant momentanée est égale ou supérieure à la valeur de seuil,
actionnement des interrupteurs pour l'interruption des liaisons existant entre les deux bornes de la paire de bornes correspondante et pour la réalisation d'une liaison des deux bornes avec des bornes correspondantes d'un dispositif pour la conversion de l'énergie stockée sous forme cinétique dans le moteur électrique en une autre forme d'énergie ;
le balayage s'effectuant à une fréquence de répétition, qui est sensiblement plus élevée que la fréquence du réseau à courant alternatif.

8. Procédé selon la revendication 7, caractérisé en ce que la conversion énergétique est effectuée par établissement d'une liaison (115) entre les deux bornes de la paire de bornes correspondante.

9. Procédé selon la revendication 8, caractérisé en ce que les deux bornes sont reliées chacune par un interrupteur (114, 124, 134) à un même fil de phase du réseau à courant alternatif.

10. Procédé selon la revendication 8 pour le fonctionnement d'un dispositif conçu selon la revendication 2, caractérisé en ce que les deux bornes sont reliées entre elles par l'intermédiaire de l'interrupteur supplémentaire (115).

11. Procédé selon la revendication 8, caractérisé en ce que les deux bornes sont reliées, chacune par un interrupteur (114, 124, 134), chacune à un fil de phase du réseau à courant alternatif.

12. Procédé selon la revendication 11, caractérisé par les phases de procédé suivantes :
• détermination d'une valeur absolue de la tension momentanée entre des paires de fils de phase (104) du réseau à courant alternatif (103) ;
• reconnaissance d'une paire de fils de phase du réseau à courant alternatif qui correspond à une valeur absolue la plus petite de la tension momentanée, et
• liaison de chacune des deux bornes avec un fil de phase de la paire ainsi déterminée.

13. Procédé selon la revendication 12, caractérisé en ce que la borne positive momentanée est reliée au fil de phase momentanément positif et la borne momentanément négative au fil de phase momentanément négatif.

14. Procédé selon la revendication 7 pour le fonctionnement d'un dispositif qui est conçu selon l'une des revendications 4 à 6, caractérisé par les étapes de procédé suivantes :
• balayage (264) de la tension momentanée entre une paire de fils de courant du réseau auxiliaire (250) et comparaison d'une valeur absolue de cette tension momentanée avec la valeur absolue de la tension momentanée entre les deux bornes d'une paire de bornes (112, 122) ;
• si la valeur absolue du courant momentané dans un enroulement (102) est inférieure à la valeur de seuil,
• et quand la valeur absolue de la tension momentanée entre les deux bornes de la paire de bornes est égale ou supérieure la valeur absolue de la tension momentanée entre les deux fils de phase correspondants du réseau à courant alternatif,
Actionnement des interrupteurs (114, 124, 134) pour l'interruption des liaisons existant entre les deux bornes de la paire de bornes correspondante et établissement d'une liaison de la borne momentanément positive respectivement négative de la paire de bornes correspondante avec le fil de courant correspondant positif respectivement négatif du réseau auxiliaire,
• et, quand en revanche la valeur absolue de la tension momentanée entre les deux bornes de la paire de bornes est inférieure à la valeur absolue de la tension momentanée entre les deux fils de phase correspondants du réseau à courant alternatif,
actionnement des interrupteurs (114, 124, 134) pour l'interruption des liaisons existant entre les deux bornes de la paire de bornes correspondante et pour la réalisation d'une liaison de la borne momentanément positive de la paire de bornes correspondante au fil de phase qui présente la valeur de tension positive momentanée la plus élevée en valeur absolue, et d'une liaison de la borne momentanément négative de la paire de bornes correspondante au fil de phase qui présente la valeur de tension négative momentanée la plus élevée en valeur absolue ;
• si la valeur absolue du courant momentané dans un enroulement est égale ou supérieure à la valeur de seuil,
• et quand la tension momentanée balayée entre les deux bornes d'une paire de bornes (112, 122) est inférieure à la tension balayée momentanée entre les deux fils de courant du réseau auxiliaire,
actionnement des interrupteurs pour l'interruption des liaisons existant entre les deux bornes de la paire de bornes correspondante et établissement d'une liaison de la borne momentanément positive respectivement négative de la paire de bornes correspondante avec le fil de courant positif respectivement négatif correspondant du réseau auxiliaire (250),
• et, quand en revanche la tension momentanée balayée entre les deux bornes d'une paire de borne est égale ou supérieure à la tension momentanée balayée entre les deux fils de courant correspondants du réseau auxiliaire,
actionnement des interrupteurs pour l'interruption des liaisons existant entre les deux bornes de la paire de bornes correspondante et pour l'établissement d'une liaison de ces deux bornes avec les bornes correspondantes dudit dispositif pour la conversion de l'énergie.

15. Procédé selon la revendication 14, caractérisé en ce que la conversion de l'énergie est provoquée par l'établissement d'une liaison de la borne momentanément positive avec le fil de courant momentanément négatif du réseau auxiliaire (250) et de la borne momentanément négative avec le fil de courant momentanément positif du réseau auxiliaire.

16. Utilisation d'un moteur à rotor à disques, commuté électroniquement et sans balai, comprenant des aimants permanents disposés sur le rotor et des enroulements à noyaux non ferrugineux disposés sur le stator en tant qu'organe de stockage de l'énergie pour le stockage réversible de l'énergie électrique par sa conversion réversible en énergie cinétique dans un moteur à rotor à disques, l'énergie électrique étant prélevée d'un réseau à courant alternatif àe fréquence prédéterminée respectivement étant ré-alimentée au réseau à courant alternatif.
